# EUROPEAN PATENT SPECIFICATION

(11) **EP 4 531 200 B1**
(45) Date of publication and mention of the grant of the patent: **14.10.2026**
(21) Application number: 23843294.2
(22) Date of filing: 17.07.2023
(51) Int. Cl.: H01M 50/564, H01M 50/557, H01M 50/533, B21D 5/01

(54) **MANUFACTURING DEVICE OF SECONDARY BATTERY AND MANUFACTURING METHOD OF SECONDARY BATTERY**
VORRICHTUNG ZUR HERSTELLUNG EINER SEKUNDÄRBATTERIE UND VERFAHREN ZUR HERSTELLUNG EINER SEKUNDÄRBATTERIE
DISPOSITIF DE FABRICATION DE BATTERIE SECONDAIRE ET PROCÉDÉ DE FABRICATION DE BATTERIE SECONDAIRE

(30) Priority: 18.07.2022 KR 20220088171
(43) Date of publication of application: 02.04.2025
(73) Proprietor: LG Energy Solution, Ltd., Seoul 07335 (KR)
(72) Inventor: CHOI, Hongjin, Daejeon 34122 (KR); SON, Gilsang, Daejeon 34122 (KR); KONG, Jinhak, Daejeon 34122 (KR); KIM, Jaeyun, Daejeon 34122 (KR)
(74) Representative: Plasseraud IP
(86) International application number: PCT/KR2023/010171
(87) International publication number: WO 2024/019445

(56) References cited:
- WO-A1-2020/158935
- JP-A- 2011 218 405
- JP-A- 2014 504 556
- KR-A- 20180 083 124
- KR-A- 20210 092 094
- KR-B1- 101 815 335

## Description

### [Technical Field]

### CROSS-REFERENCE TO RELATED APPLICATION

This application claims priority to and the benefit of Korean Patent Application No. 10-2022-0088171 filed in the Korean Intellectual Property Office on July 18, 2022.

The present invention relates to a manufacturing device of a secondary battery and a manufacturing method of a secondary battery, and specifically, to a manufacturing device of a secondary battery and a manufacturing method of a secondary battery capable of preventing disconnection by reducing tensile stress applied to a joint portion between an electrode lead and an electrode tab.

### [Background Art]

Due to the rapid increase in the use of fossil fuels, demand for the use of alternative energy and clean energy has increased, and as part thereof, the most actively researched areas are power generation and storage using electrochemistry.

Currently, secondary batteries may be a representative example of electrochemical devices using such electrochemical energy, and a use range thereof has gradually expanded.

Recently, as the technology development and demand for portable devices, such as portable computers, mobile phones, and cameras have increased, demand for secondary batteries as an energy source has rapidly increased. Among them, many studies have been conducted on lithium secondary batteries that exhibit high energy density and operating potential, have long cycle life and low self-discharge rate, lithium secondary batteries have also been commercialized and widely used.

In addition, as interest in environmental issues has grown, research on electric vehicles and hybrid electric vehicles that may replace vehicles using fossil fuels, such as gasoline vehicles and diesel vehicles, which are one of the main causes of air pollution, has been conducted. Nickel metal hydride secondary batteries have mainly been used as a power source for electric vehicles and hybrid electric vehicles, but research using lithium secondary batteries with high energy density and discharge voltage have been actively conducted, and some lithium secondary batteries have reached commercialization.

Such a lithium secondary battery is manufactured by coating a positive electrode or a negative electrode active material, a binder, and a conductive material in the form of slurry on a current collector and drying the same to form an electrode mixture layer to manufacture a positive electrode and a negative electrode, interposing a separator between the positive electrode and the negative electrode, and embedding an electrode assembly obtained by laminating the positive electrode, the negative electrode, and the separator in a battery case together with the electrolyte. Electrode tabs extending from each cell of the electrode assembly embedded in the battery case are welded together and welded to be connected to electrode leads. The lithium secondary battery may be electrically connected to an external device by the electrode leads.

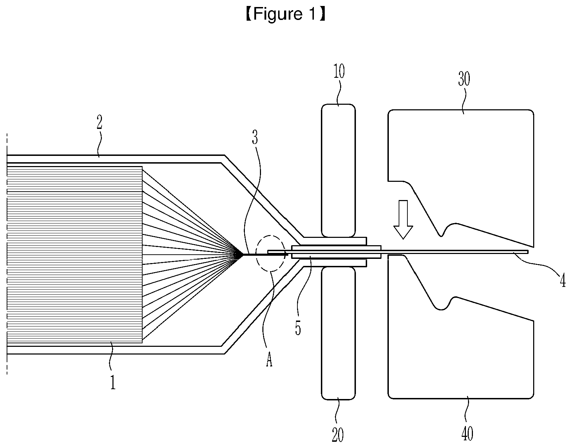

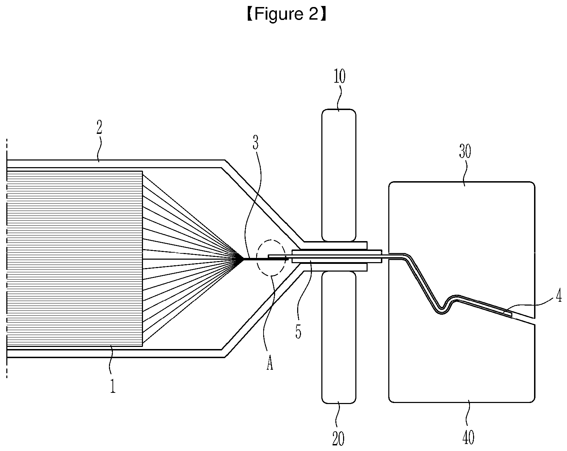

FIGS. 1 and 2 are diagrams illustrating a manufacturing device of a secondary battery according to the related art by way of example.

FIG .1 is a view illustrating a state before bending of an electrode lead in a manufacturing device of a secondary battery according to the related art, and FIG. 2 is a view illustrating a state after bending an electrode lead in a manufacturing device of a secondary battery according to the related art.

Referring to FIGS. 1 and 2, an electrode assembly 1 is formed by stacking a plurality of positive electrodes and negative electrodes with a separator interposed therebetween, and the electrode assembly 1 may be accommodated in a battery case 2 to manufacture a secondary battery. Electrode tabs 3 connected to the respective electrodes included in the electrode assembly 1 may be collected and welded to be connected to an electrode lead 4 as shown in the drawing. A lead film 5 surrounding the electrode lead 4 may be located on the electrode lead 4 to increase sealing force with the battery case 2.

The electrode lead 4 may be electrically connected to an external device, and may be appropriately molded into various shapes depending on the environment of a connection state. In order to form the electrode lead 4, a process of bending the electrode lead 4 into an appropriate shape is required. For such bending, as shown in FIGS. 1 and 2, upper and lower molds 30 and 40 having the shape of the electrode lead 4 to be obtained are prepared, a joint portion of the battery case 2 and the electrode lead 4 is fixed by an upper fixing mold 10 and a lower fixing mold 20, and in this state, the upper and lower molds 30 and 40 are combined to press the electrode lead 4. At this time, in particular, a strong tensile force is applied to a joint portion A of the electrode lead 4 and the electrode tab 3 by force that presses the electrode lead 4, and accordingly, the joint portion A of the electrode tab 3 and the electrode lead 4 may be disconnected.

### [Disclosure]

### [Technical Problem]

The problem to be solved by the present invention is a manufacturing device of a secondary battery and a manufacturing method of a secondary battery capable of preventing the occurrence of disconnection in a joint portion between an electrode tab and an electrode lead due to tensile force occurring in a molding process of the electrode lead.

However, the problems to be solved by the exemplary embodiments of the present invention are not limited to the above problems and may be variously extended within the scope of the technical idea included in the present invention.

### [Technical Solution]

According to an exemplary embodiment of the present invention, a manufacturing device of a secondary battery, including a plurality of electrodes and separators which are alternately stacked, electrode tabs provided at end portions of the plurality of electrodes, and an electrode lead coupled to the electrode tabs, includes: an upper fixing mold and a lower fixing mold fixing the electrode lead with the electrode lead interposed therebetween; and a lower molding mold disposed to be spaced apart from the lower fixing mold toward an outer end portion of the electrode lead, and a plurality of upper molding molds disposed to be spaced apart from the upper fixing mold toward an end portion of the electrode lead, wherein the plurality of upper molding molds include a first upper molding mold for fixing the electrode leads and a second upper molding mold for forming first and second bent portions, and the first upper molding mold and the second upper molding mold are separated from each other and are sequentially disposed in a direction from the electrode assembly toward the end portion of the electrode lead.

The first upper molding mold and the second upper molding mold may be movable independently of each other.

The manufacturing device may further include: a third upper molding mold disposed to be adjacent to the second upper molding mold in a direction from the electrode assembly toward the end portion of the electrode lead and forming a third bent portion.

The third upper molding mold may be separated from the first upper molding mold and the second upper molding mold and may be independently movable.

Only the electrode lead may be disposed between the first upper molding mold and the lower molding mold.

According to another exemplary embodiment of the present invention, a manufacturing method of a secondary battery including a plurality of electrodes and separators which are alternately stacked, electrode tabs provided at end portions of the plurality of electrodes, and an electrode lead coupled to the electrode tabs, includes: primarily fixing the electrode lead in a first fixing portion between an upper fixing mold and a lower fixing mold; secondarily fixing the electrode lead by lowering the first upper molding mold toward the lower molding mold in a second fixing portion spaced apart from the first fixing portion toward an outer end of the electrode lead, and forming first and second bent portions in the electrode lead by lowering, toward the lower molding mold, the second upper molding mold located to be adjacent to the first upper molding mold at an outer end portion side of the electrode lead.

The manufacturing method may further include: forming a third bent portion in the electrode lead by lowering, toward the lower molding mold, a third upper molding mold located at an outer end portion side of the electrode lead with respect to the second upper molding mold in a state in which the second upper molding mold is lowered.

In the second fixing portion, only the electrode lead may be disposed between the first upper molding mold and the lower fixing mold.

In the first fixing portion, the electrode lead, a lead film surrounding the electrode lead, and a battery case of the secondary battery may be arranged between the upper fixing mold and the lower fixing mold.

In the first fixing portion and the second fixing portion, the same magnitude of force may be applied to the upper fixing mold and the first upper molding mold to press the electrode lead.

Force pressing the electrode lead by the first upper molding mold in the second fixing portion may be greater than force pressing the electrode lead by the upper fixing mold in the first fixing portion.

### [Advantageous Effects]

According to exemplary embodiments of the present invention, it is possible to prevent disconnection in the joint portion between the electrode tab and the electrode lead by minimizing the occurrence of tensile force in the molding process of the electrode lead.

The effects of the present invention are not limited to the effects mentioned above, and other effects not mentioned will be clearly understood by those skilled in the art from the description of the claims.

### [Description of the Drawings]

FIG. 1 is a view illustrating a state before bending an electrode lead in a manufacturing device of a secondary battery according to the related art.
FIG. 2 is a view illustrating a state after bending an electrode lead in a manufacturing device of a secondary battery according to the related art.
FIG. 3 is a view illustrating a state before bending an electrode lead in a manufacturing device of a secondary battery according to an exemplary embodiment of the present invention.
FIG. 4 is a view illustrating a state after bending an electrode lead in the manufacturing device of a secondary battery of FIG. 3.
FIGS. 5 to 7 are views illustrating a manufacturing method of a secondary battery according to an exemplary embodiment of the present invention.

### [Mode for Invention]

Hereinafter, exemplary embodiments of the present invention will be described in detail with reference to the accompanying drawings to allow those skilled in the art to practice the present invention. The present invention may be implemented in various different forms and is not limited to the examples as described herein.

In order to clearly describe the present invention, parts unrelated to the description will be omitted. Throughout the specification, the same or similar constituent elements are marked with the same reference number.

The size and thickness of each component shown in the drawings may be arbitrarily shown for convenience of explanation, and therefore, the present invention is not necessarily limited to the shown exemplary embodiments in the drawings. In the drawings, the thickness of layers, films, panels, regions, etc., are exaggerated for clarity. Also, in the drawings, the thickness of partial layers and regions may be exaggerated for convenience of explanation.

It will be understood that when an element, such as a layer, film, region, or substrate is referred to as being "on" another element, it may be directly on the other element or intervening elements may also be present. In contrast, when an element is referred to as being "directly on" another element, there are no intervening elements present. Further, when an element is "above" or "on" the reference portion, it may mean that the element is located above or below the reference portion, and it may not necessarily mean that the element is "above" or "on" toward an opposite direction of gravity.

In addition, unless explicitly described to the contrary, the word "comprise", and variations, such as "comprises" or "comprising", will be understood to imply the inclusion of stated elements but not the exclusion of any other elements.

Throughout the specification, when it is referred to "in plan view", it means that a target element is viewed from above, and when it is referred to "in cross-sectional view", it means that a target element taken vertically is viewed from the side.

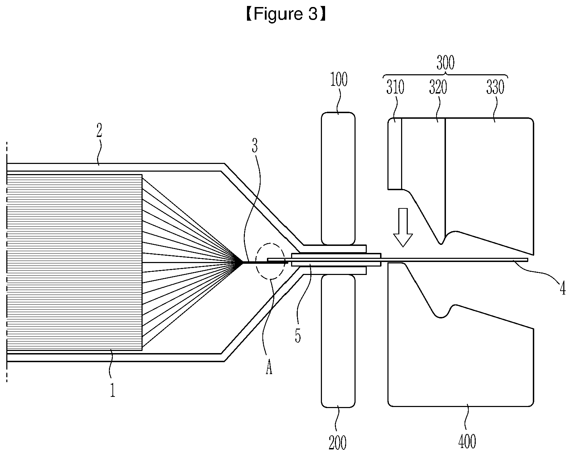

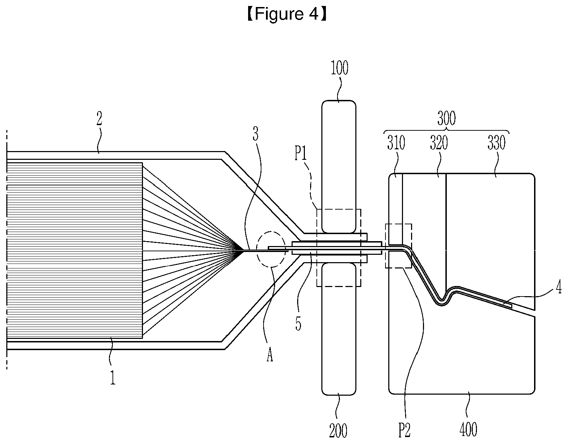

Hereinafter, a manufacturing device of a secondary battery according to an exemplary embodiment of the present invention will be described with reference to FIGS. 3 and 4.

The secondary battery includes an electrode assembly 1 accommodated in a battery case 2 and an electrode lead 4 drawn out of the battery case 2 for electrical connection with the outside. The electrode assembly 1 is a power generating device capable of charging and discharging and has a structure in which a negative electrode and a positive electrode are alternately stacked with a separator interposed therebetween. Electrode tabs 3 are formed by extending from end portions of the electrodes included in the electrode assembly 1, respectively. The electrode tabs 3 may be collected to be welded together at one point, and the collected electrode tabs 3 and the electrode lead 4 may be joined by a method, such as welding.

One end of the electrode lead 4 may be electrically connected to the electrode tab 3, extends via a sealing portion of the battery case 2, and the opposite end protrudes outwardly from the battery case 2. A lead film 5 may be located to surround the electrode lead 4 in at least one of an upper portion and a lower portion of the electrode lead 4. The lead film 5 may improve sealing properties between the sealing portion of the battery case 2 and the electrode lead 4, while preventing a short circuit from occurring in the electrode lead 4 during thermal fusion.

Referring to FIGS. 3 and 4, the manufacturing device of a secondary battery according to an exemplary embodiment of the present invention is a device for molding a portion protruding outwardly of the battery case 2 in the electrode lead 4 described above and includes an upper fixing mold 100 and a lower fixing mold 200 for fixing the electrode lead 4 and a plurality of upper molding molds 300 and a lower molding mold 400 for molding a shape of the electrode lead 4 directly in contact with the electrode lead 4.

The upper fixing mold 100 and the lower fixing mold 200 are for fixing the electrode lead 4 during a molding process, and in particular, support a portion in which the electrode lead 4 is fixed to the battery case 2 to fix the electrode lead 4. To this end, as shown in FIGS. 3 and 4, the upper fixing mold 100 and the lower fixing mold 200 are formed to contact and press a portion in which the battery case 2 and the electrode lead 4 overlap each other, that is, a first fixing portion P1 vertically. In the first fixing portion P1, the lead film 5 covering the electrode lead and the battery case 2 thermally fused to the lead film 5 may also be interposed and fixed together with the electrode lead 4 between the upper fixing mold 100 and the lower fixing mold 200.

The lower molding mold 400 is spaced apart toward an outer end portion of the electrode lead 4 and disposed to be adjacent to the lower fixing mold 200. The lower molding mold 400 is in direct contact with the electrode lead 4 and is coupled to the upper molding mold 300 with the electrode lead 4 interposed therebetween, and a molding surface in contact with the electrode lead 4 has a shape corresponding to a shape of the electrode lead 4 to be molded. In the present exemplary embodiment, a case of having three curved surfaces is taken as an example, but is not limited thereto, and may be variously modified according to a final shape of the electrode lead 4 to be obtained.

The upper molding mold 300 is spaced apart from the upper fixing mold 100 toward the outer end portion of the electrode lead 4. A plurality of upper molding molds 300 may be provided, and in the present exemplary embodiment, an example including three upper molding molds 300 is described, but the present invention is not limited thereto, and the number and position of the upper molding molds 300 may be variously adjusted.

Referring to FIGS. 3 and 4, in the present exemplary embodiment, the upper molding mold 300 includes a first upper molding mold 310, a second upper molding mold 320 and a third upper molding mold 330. These first upper molding mold 310, second upper molding mold 320 and third upper molding mold 330 are sequentially arranged in a direction from the upper fixing mold 100 toward the outer end portion of the electrode lead 4. A molding surface facing the lower molding mold 400 in a state in which the three upper molding molds 300 are combined has a shape corresponding to a shape of the electrode lead 4 to be molded. In addition, the first upper molding mold 310, the second upper molding mold 320, and the third upper molding mold 330 are formed separately from each other, and thus may be independently controlled during a process. For example, the first upper molding mold 310, the second upper molding mold 320, and the third upper molding mold 330 may be sequentially lowered one by one and controlled to be coupled to the lower molding mold 400, while pressing the electrode lead 4.

At this time, the first upper molding mold 310 may press the electrode lead 4 with the electrode lead 4 interposed between the first upper molding mold 310 and the lower molding mold 400 in a second fixing portion P2. The second fixing portion P2 is spaced apart from the first fixing portion P1 in a direction toward the outer end of the electrode lead 4. In a portion in which the second fixing portion P2 is located, only the electrode lead 4 extends, and the lead film 5 and the battery case 2 are not located. Therefore, in the second fixing portion P2, fixing may be performed in a state in which only the electrode lead 4 is disposed between the lower molding mold 400 and the first upper molding mold 310, and fixing may be performed by more reliably pressing the electrode lead 4 than in the first fixing portion P1. In addition, in some cases, a length of the electrode lead 4 fixed at the second fixing portion P2 may be increased by increasing a width of the second fixing portion P2 within a range in which interference between molds does not occur, and accordingly, the electrode lead 4 may be fixed with stronger force.

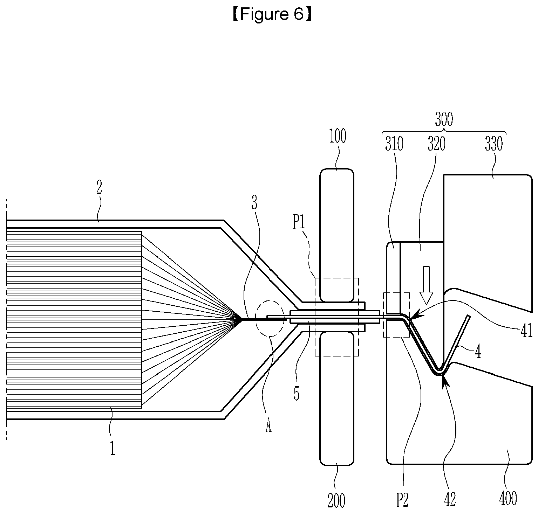

The second upper molding mold 320 is spaced apart from the first upper molding mold 310 in a direction toward the outer end portion of the electrode lead 4. A molding surface of the second upper molding mold 320 has a continuous shape from the first upper molding mold 310 and has a shape corresponding to first and second bent portions 41 and 42 (shown in FIG. 6), but, without being limited thereto, the molding surface of the second upper molding mold 320 may have various shapes according to the shape of the electrode lead 4.

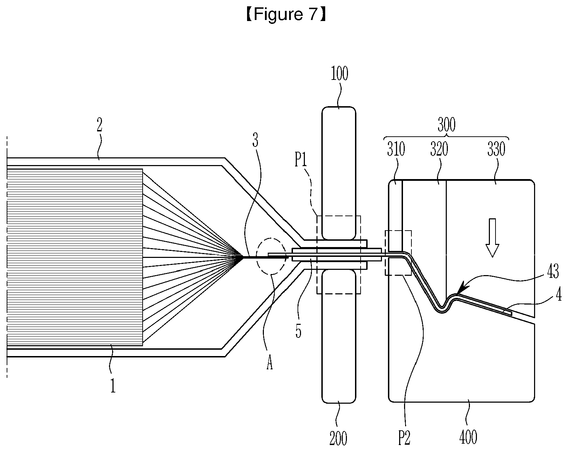

The third upper molding mold 330 is separated from the second upper molding mold 320 in the direction toward the outer end portion of the electrode lead 4. A molding surface of the third upper molding mold 330 may have a continuous shape from the second upper molding mold 320 and may have a shape corresponding to a third bent portion 43 (shown in FIG. 7), but without being limited thereto, the molding surface of the third upper molding mold 330 may have various shapes according to the shape of the electrode lead 4.

The first to third upper molding molds 310, 320, and 330 may be separated from each other and sequentially lowered to be coupled with the lower molding mold 400 to mold the electrode lead 4. According to this configuration, since additional fixing is performed in the second fixing portion P2 by the first upper molding mold 310, the magnitude of tensile force applied to the electrode lead 4 during molding of the electrode lead 4 may be reduced. That is, tensile force applied to the electrode lead 4, in particular, a joint portion A between the electrode lead 4 and the electrode tab 3, is generated as much as a direction in which the electrode lead 4 is pulled during molding, but may be reduced by frictional force generated by fixing in the first and second fixing portions P1 and P2. In the related art, fixing is performed only in the first fixing portion P1, and since the electrode lead 4 is fixed in the corresponding portion via the lead film 5 and the battery case 2, frictional force generated by the fixing is not enough to reduce the magnitude of tensile force generated during molding and transmitted to the joint portion A between the electrode lead 4 and the electrode tab 3 as it is, causing problems, such as disconnection. However, in the present exemplary embodiment, since additional fixing is performed in the second fixing portion P2 and only the electrode lead 4 is directly fixed in the corresponding portion, the magnitude of the frictional force may be further increased, and thus, the magnitude of tensile force generated during molding may be sufficiently reduced, and thus, the occurrence of disconnection in the joint portion A between the electrode lead 4 and the electrode tab 3 may be prevented.

In addition, compared to a case in which the molding mold presses the electrode lead 4 at once, the molding mold is divided and sequentially lowered to press the electrode lead 4, and thus, since the magnitude of the tensile force generated at once is reduced, thereby efficiently preventing disconnection of the electrode lead 4. As described above, according to the manufacturing device of a secondary battery according to an exemplary embodiment of the present invention, disconnection may be prevented by minimizing tensile force applied to the electrode lead 4 and the electrode tab 3 during bending of the electrode lead 4.

Hereinafter, as a manufacturing method using the manufacturing device of a secondary battery described above, a manufacturing method of a secondary battery according to one exemplary embodiment and another exemplary embodiment of the present invention will be described.

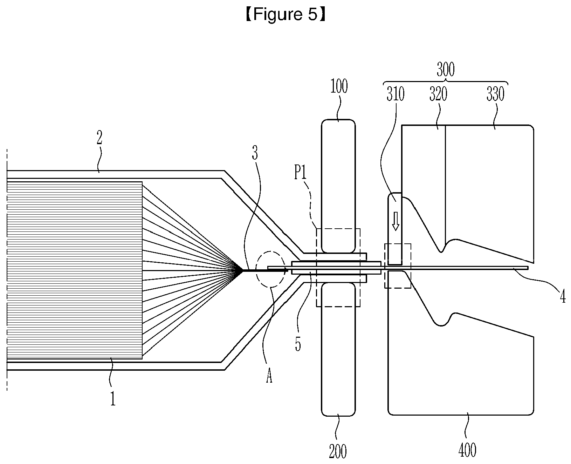

FIGS. 5 to 7 are views illustrating a manufacturing method of a secondary battery according to an exemplary embodiment of the present invention.

Referring to FIG. 5, in the manufacturing method of a secondary battery according to an exemplary embodiment of the present invention, first, the electrode lead 4 is fixed between (the first fixing portion P1) the upper fixing mold 100 and the lower fixing mold 200. Thereafter, the first upper molding mold 310 is lowered toward the lower molding mold 400. At this time, the electrode lead 4 may be additionally fixed in the second fixing portion P2, or the upper molding mold 300 may be sequentially lowered to be applied without additional fixing. In the case of additional fixing, not only the electrode lead 4 but also the lead film 5 and a portion of the battery case 2 may be fixed together to the first fixing portion P1, and only the electrode lead 4 may be fixed to the second fixing portion P2.

In addition, pressure may be applied to the first fixing portion P1 and the second fixing portion P2 by the upper fixing mold 100 or the first upper molding mold 310 for additional fixing. Thereby, the electrode lead 4 may be fixed more reliably. At this time, force applied in the first fixing portion P1 and the second fixing portion P2 may be the same, or a greater force may be applied in the second fixing portion P2. In the second fixing portion P2, only the electrode lead 4 is fixed, and since the electrode lead 4 has greater strength than that of the battery case 2 or the like fixed in the first fixing portion P1, a possibility of the occurrence of a dent and damage against greater pressure may be reduced. Therefore, when it is necessary to increase fixing strength, it is preferable to increase fixing strength by increasing pressing force in the second fixing portion P2.

Next, referring to FIG. 6, the second upper molding mold 320 disposed to be adjacent to the first upper molding mold 310 are lowered toward the lower molding mold 400 to form the first bent portion 41 and the second bent portion 42. That is, the first bent portion 41 may be formed in a portion in which the first upper molding mold 310 and the second upper molding mold 320 are continuous, and may be bent as the second upper molding mold 320 is lowered, while pressing the electrode lead 4. The second bent portion 42 may be formed to be bent along the shape of the molding surface of the second upper molding mold 320.

Lastly, referring to FIG. 7, molding of the electrode lead 4 may be completed by lowering the third upper molding mold 330 to form the third bent portion 43.

As described above, in the manufacturing method of molding the electrode lead 4 using the manufacturing device of a secondary battery according to an exemplary embodiment of the present invention, since the electrode lead 4 is fixed by the first and second fixing portions P, while the electrode lead 4 is pressed and a tensile force is applied, tensile force applied to the electrode lead 4 may be reduced. In addition, since tensile force is sequentially applied in order close to the electrode assembly, rather than that the molding mold across the entire region of the electrode lead 4 applies tensile force at once, the tensile force applied to the electrode lead 4 may be distributed over time, thereby preventing disconnection that may occur when excessive tensile force is applied to the electrode lead 4. In addition, in the present exemplary embodiment, molding is performed by dividing the upper molding mold 300 into three stages, but the upper molding mold 300 may be divided in various ways according to the shape of the electrode lead 4 and a process situation to perform molding.

Hereinafter, tensile force generated in the manufacturing method of a secondary battery according to exemplary embodiments of the present invention and a manufacturing method of a secondary battery according to Comparative Example will be measured and results thereof will be described.

In Example 1, the first to third upper molding molds 310, 320, and 330 were sequentially moved by about 12 mm in the manufacturing method of FIGS. 5 to 7, and at this time, in the first fixing portion P1, pressure was applied with force of 45 kgf, and in the second fixing portion P2, only the first upper molding mold 310, the second upper molding mold 320, and the third upper molding mold 330 perform molding sequentially without fixing.

In Example 2, molding was performed in the same manner as in Example 1, but fixing was additionally performed also in the second fixing portion P2 by applying pressure with force of 45 kgf.

In Example 3, molding was performed in the same manner as in Example 2, but the widths of the first upper molding mold 310 and the lower molding mold 400 were increased by 2.5 mm toward the fixing molds 100 and 200 and fixing was performed in a state in which the length by which the electrode lead 4 and the mold contact each other is increased in the second fixing portion P2. As a result, the contact area between the electrode lead 4 and the mold in the second fixing portion P2 increased 3 times compared to Example 2, and as a result, fixing was performed in the second fixing portion P2 by applying pressure with force of 135 kgf increased three times.

Meanwhile, in Comparative Example, the electrode lead 4 was molded by moving an upper mold 30 by about 12 mm in the same manner as in Example 1 using the mold of FIGS. 1 and 2.

During molding in Examples 1 to 3 and Comparative Example, the maximum values of tensile force applied to the joint portion A between the electrode tab 3 and the electrode lead 4 were measured. The results are shown in Table 1 below.

**[Table 1]**

| | Maximum | Rate of change of maximum tensile force |
|---|---|---|
| | tensile force(N) | compared to Comparative Example (%) |
| Comparative Example | 665.4 | - |
| Example 1 | 439.9 | -33.9 |
| Example 2 | 332.0 | -50.1 |
| Example 3 | 172.5 | -74.1 |

As shown in Table 1, in the case of Examples of the present invention, it was confirmed that the maximum tensile force values were significantly lower than that of Comparative Example. Accordingly, it can be seen that disconnection of the electrode tab 3 and the electrode lead 4 may be prevented from occurring in the molding process of the electrode lead 4 according to the exemplary embodiments of the present invention.

### <Description of reference numeral>

3: electrode tab
4: electrode lead
100: upper fixing mold
200: lower fixing mold
300: upper molding mold
310: first upper molding mold
320: second upper molding mold
330: third upper molding mold
400: lower molding mold

## Claims

1. A manufacturing device of a secondary battery including a plurality of electrodes and separators which are alternately stacked, electrode tabs (3) provided at end portions of the plurality of electrodes, and an electrode lead (4) coupled to the electrode tabs (3), the manufacturing device comprising:
an upper fixing mold (100) and a lower fixing mold (200) fixing the electrode lead (4) with the electrode lead (4) interposed therebetween, and
a lower molding mold (400) disposed to be spaced apart from the lower fixing mold (200) toward an outer end portion of the electrode lead (4), and a plurality of upper molding molds (300) disposed to be spaced apart from the upper fixing mold (100) toward an end portion of the electrode lead (4),
wherein the plurality of upper molding molds (300) include a first upper molding mold (310) for fixing the electrode leads (4) and a second upper molding mold (320) for forming first and second (41, 42) bent portions, and
the first upper molding mold (310) and the second upper molding mold (320) are separated from each other and are sequentially disposed in a direction from the electrode assembly (1) toward the end portion of the electrode lead (4).

2. The manufacturing device of claim 1, wherein:
the first upper molding mold (310) and the second upper molding mold (320) are movable independently of each other.

3. The manufacturing device of claim 1, further comprising:
a third upper molding mold (330) disposed to be adjacent to the second upper molding mold (320) in a direction from the electrode assembly (1) toward the end portion of the electrode lead (4) and forming a third bent portion (43).

4. The manufacturing device of claim 3, wherein:
the third upper molding mold (330) is separated from the first upper molding mold (310) and the second upper molding mold (320) and is independently movable.

5. The manufacturing device of claim 1, wherein:
only the electrode lead (4) is disposed between the first upper molding mold (310) and the lower molding mold (400).

6. A manufacturing method of a secondary battery including a plurality of electrodes and separators which are alternately stacked, electrode tabs (3) provided at end portions of the plurality of electrodes, and an electrode lead (4) coupled to the electrode tabs (3), the manufacturing method comprising:
primarily fixing the electrode lead (4) in a first fixing portion (P1) between an upper fixing mold (100) and a lower fixing mold (200);
secondarily fixing the electrode lead (4) by lowering the first upper molding mold (310) toward the lower molding mold (400) in a second fixing portion (P2) spaced apart from the first fixing portion (P1) toward an outer end of the electrode lead (4), and
forming first and second bent portions (41, 42) in the electrode lead (4) by lowering, toward the lower molding mold (400), the second upper molding mold (320) located to be adjacent to the first upper molding mold (310) at an outer end portion side of the electrode lead (4).

7. The manufacturing method of claim 6, further comprising:
forming a third bent portion (43) in the electrode lead (4) by lowering, toward the lower molding mold (400), a third upper molding mold (330) located at the outer end portion side of the electrode lead (4) with respect to the second upper molding mold (320), in a state in which the second upper molding mold (320) is lowered.

8. The manufacturing method of claim 6, wherein:
in the second fixing portion (P2), only the electrode lead (4) is disposed between the first upper molding mold (310) and the lower fixing mold (200).

9. The manufacturing method of claim 8, wherein:
in the first fixing portion (P1), the electrode lead (4), a lead film surrounding the electrode lead (4), and a battery case of the secondary battery are arranged between the upper fixing mold (100) and the lower fixing mold (200).

10. The manufacturing method of claim 6, wherein:
in the first fixing portion (P1) and the second fixing portion (P2), the same magnitude of force is applied to the upper fixing mold (100) and the first upper molding mold (310) to press the electrode lead (4).

11. The manufacturing method of claim 6, wherein:
force pressing the electrode lead (4) by the first upper molding mold (310) in the second fixing portion (P2) is greater than force pressing the electrode lead (4) by the upper fixing mold (100) in the first fixing portion (P1).

## Patentansprüche

1. Herstellungsvorrichtung für eine Sekundärbatterie, einschließlich einer Vielzahl von Elektroden und Separatoren, die abwechselnd gestapelt sind, Elektrodenfahnen (3), die an Endabschnitten der Vielzahl von Elektroden vorgesehen sind, und eines Elektrodenableiters (4), der mit den Elektrodenfahnen (3) gekoppelt ist, die Herstellungsvorrichtung umfassend:
eine obere Fixierform (100) und eine untere Fixierform (200), die den Elektrodenableiter (4) fixieren, wobei der Elektrodenableiter (4) dazwischen angeordnet ist; und
eine untere Formungsform (400), die so angeordnet ist, dass sie von der unteren Fixierform (200) in Richtung eines äußeren Endabschnitts des Elektrodenableiters (4) beabstandet ist, und eine Vielzahl von oberen Formungsformen (300), die so angeordnet sind, dass sie von der oberen Fixierform (100) in Richtung eines Endabschnitts des Elektrodenableiters (4) beabstandet sind,
wobei die Vielzahl von oberen Formungsformen (300) eine erste obere Formungsform (310) zum Fixieren der Elektrodenableiter (4) und eine zweite obere Formungsform (320) zum Bilden von ersten und zweiten (41, 42) gebogenen Abschnitten umfassen, und
die erste obere Formungsform (310) und die zweite obere Formungsform (320) voneinander getrennt und nacheinander in einer Richtung von der Elektrodenanordnung (1) zum Endabschnitt des Elektrodenableiters (4) angeordnet sind.

2. . Herstellungsvorrichtung nach Anspruch 1, wobei:
die erste obere Formungsform (310) und die zweite obere Formungsform (320) unabhängig voneinander beweglich sind.

3. . Herstellungsvorrichtung nach Anspruch 1, ferner umfassend:
eine dritte obere Formungsform (330), die benachbart zur zweiten oberen Formungsform (320) in einer Richtung von der Elektrodenanordnung (1) zum Endabschnitt des Elektrodenableiters (4) angeordnet ist und einen dritten gebogenen Abschnitt (43) bildet.

4. . Herstellungsvorrichtung nach Anspruch 3, wobei:
die dritte obere Formungsform (330) von der ersten oberen Formungsform (310) und der zweiten oberen Formungsform (320) getrennt und unabhängig beweglich ist.

5. . Herstellungsvorrichtung nach Anspruch 1, wobei:
nur der Elektrodenableiter (4) zwischen der ersten oberen Formungsform (310) und der unteren Formungsform (400) angeordnet ist.

6. . Herstellungsverfahren für eine Sekundärbatterie, einschließlich einer Vielzahl von Elektroden und Separatoren, die abwechselnd gestapelt sind, Elektrodenfahnen (3), die an Endabschnitten der Vielzahl von Elektroden vorgesehen sind, und eines Elektrodenableiters (4), der mit den Elektrodenfahnen (3) gekoppelt ist, das Herstellungsverfahren umfassend:
primäres Fixieren des Elektrodenableiters (4) in einem ersten Fixierabschnitt (P1) zwischen einer oberen Fixierform (100) und einer unteren Fixierform (200);
sekundäres Fixieren des Elektrodenableiters (4) durch Absenken der ersten oberen Formungsform (310) in Richtung der unteren Formungsform (400) in einem zweiten Fixierabschnitt (P2), der vom ersten Fixierabschnitt (P1) in Richtung eines äußeren Endes des Elektrodenableiters (4) beabstandet ist, und
Bilden von ersten und zweiten gebogenen Abschnitten (41, 42) im Elektrodenableiter (4) durch Absenken, in Richtung der unteren Formungsform (400), der zweiten oberen Formungsform (320), die an einer äußeren Endabschnittsseite des Elektrodenableiters (4) benachbart zur ersten oberen Formungsform (310) angeordnet ist.

7. . Herstellungsverfahren nach Anspruch 6, ferner umfassend:
Bilden eines dritten gebogenen Abschnitts (43) im Elektrodenableiter (4) durch Absenken, in Richtung der unteren Formungsform (400), einer dritten oberen Formungsform (330), die bezüglich der zweiten oberen Formungsform (320) auf der Seite des äußeren Endabschnitts des Elektrodenableiters (4) angeordnet ist, in einem Zustand, in dem die zweite obere Formungsform (320) abgesenkt ist.

8. . Herstellungsverfahren nach Anspruch 6, wobei:
im zweiten Fixierabschnitt (P2) nur der Elektrodenableiter (4) zwischen der ersten oberen Formungsform (310) und der unteren Fixierform (200) angeordnet ist.

9. . Herstellungsverfahren nach Anspruch 8, wobei:
im ersten Fixierabschnitt (P1) der Elektrodenableiter (4), eine Ableiterfolie, die den Elektrodenableiter (4) umgibt, und ein Batteriegehäuse der Sekundärbatterie zwischen der oberen Fixierform (100) und der unteren Fixierform (200) angeordnet sind.

10. . Herstellungsverfahren nach Anspruch 6, wobei:
im ersten Fixierabschnitt (P1) und im zweiten Fixierabschnitt (P2) die gleiche Kraftgröße auf die obere Fixierform (100) und die erste obere Formungsform (310) ausgeübt wird, um den Elektrodenableiter (4) zu pressen.

11. . Herstellungsverfahren nach Anspruch 6, wobei:
die Kraft, mit der der Elektrodenableiter (4) von der ersten oberen Formungsform (310) im zweiten Fixierabschnitt (P2) gepresst wird, größer ist als die Kraft, mit der der Elektrodenableiter (4) von der oberen Fixierform (100) im ersten Fixierabschnitt (P1) gepresst wird.

## Revendications

1. Dispositif de fabrication d'une batterie secondaire incluant une pluralité d'électrodes et de séparateurs qui sont empilés en alternance, des languettes d'électrode (3) prévues au niveau de parties d'extrémité de la pluralité d'électrodes, et une sortie d'électrode (4) couplée aux languettes d'électrode (3), le dispositif de fabrication comprenant :
un moule de fixation supérieur (100) et un moule de fixation inférieur (200) fixant la sortie d'électrode (4) avec la sortie d'électrode (4) interposée entre eux ; et
un moule de moulage inférieur (400) disposé de manière à être espacé du moule de fixation inférieur (200) vers une partie d'extrémité extérieure de la sortie d'électrode (4), et une pluralité de moules de moulage supérieurs (300) disposés de manière à être espacés du moule de fixation supérieur (100) vers une partie d'extrémité de la sortie d'électrode (4),
dans lequel la pluralité de moules de moulage supérieurs (300) incluent un premier moule de moulage supérieur (310) pour fixer les sorties d'électrode (4) et un deuxième moule de moulage supérieur (320) pour former des première et deuxième (41, 42) parties pliées, et
le premier moule de moulage supérieur (310) et le deuxième moule de moulage supérieur (320) sont séparés l'un de l'autre et sont disposés séquentiellement dans une direction allant de l'assemblage d'électrodes (1) vers la partie d'extrémité de la sortie d'électrode (4).

2. Dispositif de fabrication selon la revendication 1, dans lequel :
le premier moule de moulage supérieur (310) et le deuxième moule de moulage supérieur (320) sont mobiles indépendamment l'un de l'autre.

3. Dispositif de fabrication selon la revendication 1, comprenant en outre :
un troisième moule de moulage supérieur (330) disposé de manière adjacente au deuxième moule de moulage supérieur (320) dans une direction allant de l'assemblage d'électrodes (1) vers la partie d'extrémité de la sortie d'électrode (4) et formant une troisième partie pliée (43).

4. Dispositif de fabrication selon la revendication 3, dans lequel :
le troisième moule de moulage supérieur (330) est séparé du premier moule de moulage supérieur (310) et du deuxième moule de moulage supérieur (320) et est mobile indépendamment.

5. Dispositif de fabrication selon la revendication 1, dans lequel :
seule la sortie d'électrode (4) est disposée entre le premier moule de moulage supérieur (310) et le moule de moulage inférieur (400).

6. Procédé de fabrication d'une batterie secondaire incluant une pluralité d'électrodes et de séparateurs qui sont empilés en alternance, des languettes d'électrode (3) prévues au niveau de parties d'extrémité de la pluralité d'électrodes, et une sortie d'électrode (4) couplée aux languettes d'électrode (3), le procédé de fabrication comprenant :
la fixation primaire de la sortie d'électrode (4) dans une première partie de fixation (P1) entre un moule de fixation supérieur (100) et un moule de fixation inférieur (200) ;
la fixation secondaire de la sortie d'électrode (4) en abaissant le premier moule de moulage supérieur (310) vers le moule de moulage inférieur (400) dans une deuxième partie de fixation (P2) espacée de la première partie de fixation (P1) vers une extrémité extérieure de la sortie d'électrode (4), et
la formation de première et deuxième parties pliées (41, 42) dans la sortie d'électrode (4) en abaissant, vers le moule de moulage inférieur (400), le deuxième moule de moulage supérieur (320) situé de manière adjacente au premier moule de moulage supérieur (310) du côté d'une partie d'extrémité extérieure de la sortie d'électrode (4).

7. Procédé de fabrication selon la revendication 6, comprenant en outre :
la formation d'une troisième partie pliée (43) dans la sortie d'électrode (4) en abaissant, vers le moule de moulage inférieur (400), un troisième moule de moulage supérieur (330) situé du côté de la partie d'extrémité extérieure de la sortie d'électrode (4) par rapport au deuxième moule de moulage supérieur (320), dans un état dans lequel le deuxième moule de moulage supérieur (320) est abaissé.

8. Procédé de fabrication selon la revendication 6, dans lequel :
dans la deuxième partie de fixation (P2), seule la sortie d'électrode (4) est disposée entre le premier moule de moulage supérieur (310) et le moule de fixation inférieur (200).

9. Procédé de fabrication selon la revendication 8, dans lequel :
dans la première partie de fixation (P1), la sortie d'électrode (4), un film conducteur entourant la sortie d'électrode (4), et un boîtier de batterie de la batterie secondaire sont agencés entre le moule de fixation supérieur (100) et le moule de fixation inférieur (200).

10. Procédé de fabrication selon la revendication 6, dans lequel :
dans la première partie de fixation (P1) et la deuxième partie de fixation (P2), la même grandeur de force est appliquée au moule de fixation supérieur (100) et au premier moule de moulage supérieur (310) pour presser la sortie d'électrode (4).

11. Procédé de fabrication selon la revendication 6, dans lequel :
la force pressant la sortie d'électrode (4) par le premier moule de moulage supérieur (310) dans la deuxième partie de fixation (P2) est supérieure à la force pressant la sortie d'électrode (4) par le moule de fixation supérieur (100) dans la première partie de fixation (P1).
